# EUROPÄISCHE PATENTSCHRIFT

(11) **EP 2 524 159 B1**
(45) Veröffentlichungstag und Bekanntmachung des Hinweises auf die Patenterteilung: **19.03.2014**
(21) Anmeldenummer: 10801125.5
(22) Anmeldetag: 09.12.2010
(51) Int. Cl.: F16J 15/34

(54) **GLEITRINGDICHTUNGSEINHEIT, INSBESONDERE FÜR EINE FEUERLÖSCHPUMPE**
SLIP RING SEALING UNIT, IN PARTICULAR FOR A FIRE PUMP
UNITÉ D'ÉTANCHÉITÉ À BAGUES DE GLISSEMENT, EN PARTICULIER POUR UNE POMPE À INCENDIE

(30) Priorität: 14.01.2010 DE 202010000954 U
(43) Veröffentlichungstag der Anmeldung: 21.11.2012
(73) Patentinhaber: EagleBurgmann Germany GmbH & Co. KG, 82515 Wolfratshausen (DE)
(72) Erfinder: HOLZAPFEL, Thomas, 82404 Sindelsdorf (DE); RIES, Wolfgang, 82433 Bad Kohlgrub (DE); SVEJKOVSKY, Reinhard, 82538 Geretsried (DE)
(74) Vertreter: Schaeberle, Steffen
(86) Internationale Anmeldenummer: PCT/EP2010/007509
(87) Internationale Veröffentlichungsnummer: WO 2011/085762

(56) Entgegenhaltungen:
- WO-A1-99/00618
- WO-A1-2008/045087
- GB-A- 2 399 603
- US-A1- 2005 035 554
- US-A1- 2009 315 271

## Beschreibung

Die vorliegende Erfindung betrifft eine Gleitringdichtungseinheit, welche als vormontierte Baugruppe, insbesondere bei Feuerlöschpumpen, verwendet werden kann.

Aus dem Stand der Technik sind verschiedene Gleitringdichtungsanordnungen bekannt, welche z.B. auch bei Pumpen verwendet werden können. Ein besonderes Einsatzgebiet derartiger Pumpen sind beispielsweise mobile Feuerlöschpumpen, welche insbesondere zur Waldbrandbekämpfung eingesetzt werden. Derartige Feuerlöschpumpen werden zum Teil in extremen Einsatzbedingungen verwendet, und müssen dementsprechend robust aufgebaut sein. Hierbei wird häufig Wasser zur Brandbekämpfung aus einem Fluss oder Teich o.ä. verwendet, so dass das Löschwasser häufig Verunreinigungen oder kleine Feststoffe aufweist. Daher muss auch eine in einer derartigen Feuerlöschpumpe vorhandene Gleitringdichtung einen robusten Betrieb erlauben. Aufgrund der erschwerten Einsatzbedingungen kann es vorkommen, dass ggf. auch eine Gleitringdichtung beschädigt wird und demnach schnell und einfach ausgetauscht werden sollte.

Weiterhin zeigt die GB 2 399 603 A eine Gleitringdichtungseinheit mit einem rotierenden und einem stationären Gleitring sowie einer Innenhülse und einer Außenhülse. Die Außenhülse ist dabei am stationären Gleitring mittels eines Sicherungsrings gesichert. Die Innenhülse und die Außenhülse weisen dabei jeweils eine Länge in Axialrichtung auf, welche größer ist als eine Summe der axialen Längen des stationären und des rotierenden Gleitrings. Die Innenhülse weist dabei mittig eine formschlüssige Verbindung mit einer Welle auf.

Die US 2009/031527 A1 offenbart eine Kreiselpumpe mit einer vormontierten Gleitringdichtungseinheit gemäß dem Oberbegriff vom Anspruch 1.

Es ist daher Aufgabe der vorliegenden Erfindung, eine Pumpe mit einer vormontierten Gleitringdichtungseinheit bereitzustellen, welche bei einfacher und kostengünstiger Herstellbarkeit einen möglichst robusten Aufbau aufweist und ggf. einen schnellen Austausch erlaubt.

Diese Aufgabe wird durch eine Pumpe mit einer Gleitringdichtungseinheit mit den Merkmalen des Anspruches 1 gelöst. Die Unteransprüche haben bevorzugte Weiterbildungen der Erfindung zum Gegenstand.

Die erfindungsgemässe Pumpe mit vormontierter Gleitringdichtungseinheit weist den Vorteil auf, dass die Gleitringdichtungseinheit als kompakte Einheit montagefertig ist und schnell und einfach, z.B. in eine Feuerlöschpumpe, eingebaut werden kann. Die Gleitringdichtungseinheit umfasst dabei einen rotierenden und einen stationären Gleitring, welche zwischen sich einen Dichtspalt ausbilden, eine Innenhülse, die mit dem rotierenden Gleitring verbunden ist, sowie eine Aussenhülse, die mit dem stationären Gleitring verbunden ist. Ferner ist ein Sicherungselement vorgesehen, welches die Aussenhülse an der Innenhülse sichert, so dass die Gleitringdichtungseinheit im vormontierten Zustand nicht wieder auseinanderfallen kann. In Axialrichtung weisen die Innenhülse und die Aussenhülse jeweils eine Länge auf, welche länger ist als eine Summe der axialen Längen des stationären und rotierenden Gleitringes. Somit sind die Gleitringe von der Innenhülse und der Aussenhülse über ihre axiale Länge in radialer Richtung vollständig überdeckt. Für eine einfache und schnelle Montage ist weiterhin an der Innenhülse eine erste und zweite Formschlussvorrichtung ausgebildet, welche jeweils an einem der axialen Enden der Innenhülse angeordnet sind. Bei der Pumpe der vorliegenden Erfindung ist zwischen einem ersten axialen Ende einer Innenhülse der Gleitringdichtungseinheit und einem Pumpenrad eine erste Formschlussvorrichtung ausgebildet sowie zwischen einem zweiten axialen Ende der Innenhülse und einer Antriebswelle eine zweite Formschlussvorrichtung vorgesehen. Hierdurch kann die vormontierte Gleitringdichtungseinheit einfach und sicher montiert werden. Vorzugsweise ist dabei ein Lager für die Antriebswelle unmittelbar benachbart zur Gleitringdichtungseinheit angeordnet. Hierdurch kann die Gleitringdichtungseinheit auch eine zuverlässige Abdichtung für das Lager bereitstellen. Die zweite Formschlussvorrichtung ist vorzugsweise an einem Wellenabsatz der Antriebswelle vorgesehen.

Um die Montage zu vereinfachen und Montagefehler zu verhindern, sind die beiden Formschlussvorrichtungen an der Innenhülse vorzugsweise unterschiedlich ausgebildet. Weiter bevorzugt sind die beiden Formschlussvorrichtungen an den axialen Enden der Innenhülse an jeweils einer radial inneren Position angeordnet.

Bei einer bevorzugten Ausgestaltung der Erfindung umfasst die erste Formschlussvorrichtung Ausnehmungen, welche vorzugsweise gleich verteilt am ersten axialen Ende der Innenhülse angeordnet sind. Weiter bevorzugt umfasst die zweite Formschlussvorrichtung vorstehende Elemente, welche in Umfangsrichtung gleich verteilt am zweiten axialen Ende der Innenhülse angeordnet sind.

Weiter bevorzugt ist ein Federelement vorgesehen, welches am stationären Gleitring angeordnet ist, um den stationären Gleitring gegen den rotierenden Gleitring vorzuspannen, wobei sich das Federelement vorzugsweise an der Aussenhülse abstützt. Dadurch kann das Federelement auf einfache Weise in die Gleitringdichtungseinheit integriert werden.

Gemäss einer weiteren bevorzugten Ausgestaltung der Erfindung umfasst die Gleitringdichtungseinheit Haltestifte, welche an der Aussenhülse angeordnet sind, wobei im stationären Gleitring Ausnehmungen vorhanden sind, in welche die Haltestifte eingreifen. Hierdurch wird der stationäre Gleitring ortsfest gehalten, um ein Mitdrehen mit dem rotierenden Gleitring zu vermeiden.

Vorzugsweise umfasst die Innenhülse einen radial nach aussen gerichteten Flansch, und die Aussenhülse umfasst einen radial nach innen gerichteten Flansch. Hierdurch können die Gleitringe zwischen die beiden Flansche der Innenhülse mit der Aussenhülse angeordnet werden, so dass sich eine besonders kompakte Einheit ergibt.
Weiterhin ergibt sich dadurch eine sehr geringe Teileanzahl.

Vorzugsweise umfasst die Innenhülse eine umlaufende Ausnehmung am nach aussen gerichteten, radialen Flansch zur Aufnahme des rotierenden Gleitringes. Der Flansch ist vorzugsweise übergreifend vorgesehen, so dass er einen Aussenumfang des rotierenden Gleitringes zumindest teilweise übergreift.

Um die Gleitringe sowie die Innenhülse zu schützen, ist eine axiale Länge der Aussenhülse vorzugsweise grösser als eine axiale Länge der Innenhülse.

Für einen möglichst sicheren Betrieb ist weiter bevorzugt die Gleitringdichtungseinheit als aussen beaufschlagte Gleitringdichtungseinheit ausgebildet, wobei eine Rückseite des stationären Gleitringes ebenfalls mit dem abzudichtenden Medium in Kontakt steht.

Nachfolgend wird ein bevorzugtes Ausführungsbeispiel unter Bezugnahme auf die begleitende Zeichnung im Detail beschrieben. In der Zeichnung ist:
- Fig. 1: eine schematische Schnittansicht einer Pumpe mit einer Gleitringdichtungseinheit gemäss einem Ausführungsbeispiel der Erfindung,
- Fig. 2: eine Schnittansicht einer Innenhülse der Gleitringdichtungseinheit von Fig. 1,
- Fig. 3: eine Draufsicht der Innenhülse von Fig. 2 mit einer ersten Formschlussvorrichtung, und
- Fig. 4: eine Draufsicht eines zweiten axialen Endes der Innenhülse mit einer zweiten Formschlussvorrichtung.

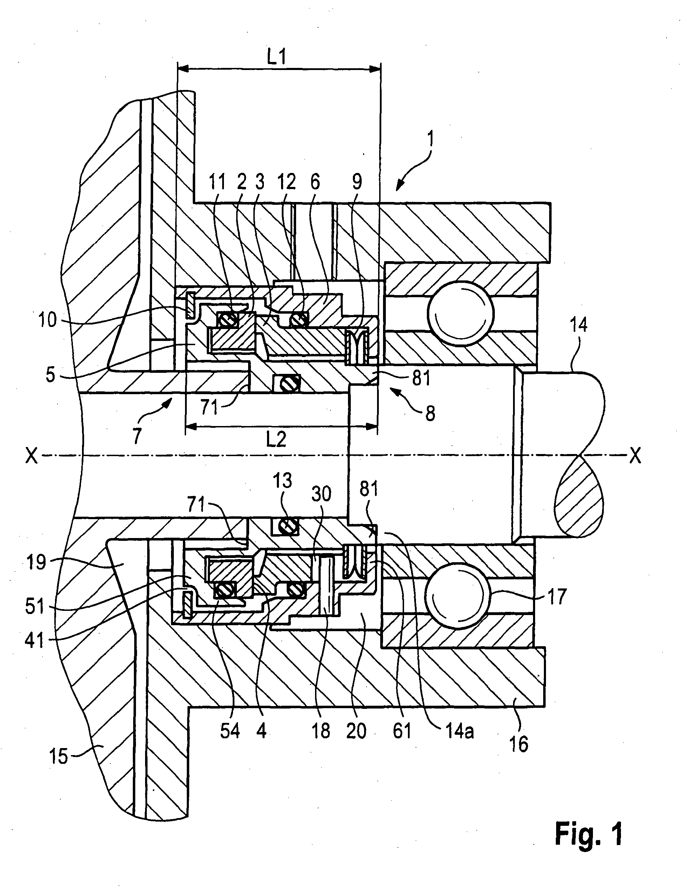

Nachfolgend wird unter Bezugnahme auf die Fig. 1 bis 4 eine Gleitringdichtungseinheit 1 gemäss einer bevorzugten Ausgestaltung der Erfindung im Detail beschrieben.

Fig. 1 zeigt eine schematische Schnittansicht einer Pumpe mit einer Antriebswelle 14 und einem Pumpenrad 15, bei der eine erfindungsgemässe, vormontierte Gleitringdichtungseinheit 1 eingebaut ist. Die vormontierte Gleitringdichtungseinheit 1 kann dabei als komplette Baugruppe schnell und einfach in die Pumpe montiert werden.

Wie aus Fig. 1 ersichtlich ist, umfasst die Gleitringdichtungseinheit 1 einen rotierenden Gleitring 2 und einen stationären Gleitring 3, welche an den zu einander gerichteten Gleitflächen einen Dichtspalt 4 definieren. Die vormontierte Gleitringdichtungseinheit 1 umfasst ferner eine einstückige Innenhülse 5, welche gemeinsam mit der Antriebswelle 14 rotiert, und eine einstückige Aussenhülse 6, welche an einem Gehäuse 16 fixiert ist. Weiterhin umfasst die Gleitringdichtungseinheit 1 ein Federelement 9, welches den stationären Gleitring 3 gegen den rotierenden Gleitring 2 vorspannt. Das Federelement 9 stützt sich dabei mit einem Ende an einem radial nach innen gerichteten Flansch 61 der Aussenhülse 6 ab. Die Innenhülse weist einen nach aussen gerichteten Flansch 51 auf, wobei die beiden Gleitringe 2, 3 sowie das Federelement in Axialrichtung X-X zwischen den Flanschen 51, 61 angeordnet sind (vgl. Fig. 1). In Axialrichtung weisen die Innenhülse 5 und die Aussenhülse 6 jeweils eine Länge auf, welche länger ist als eine Summe der axialen Längen des stationären und rotierenden Gleitringes 2, 3. Somit sind die Gleitringe 2, 3 von der Innenhülse 5 und der Aussenhülse 6 über ihre axiale Länge in radialer Richtung vollständig überdeckt. Dadurch sind die Gleitringe 2, 3 der vormontierten Einheit sehr gut geschützt.

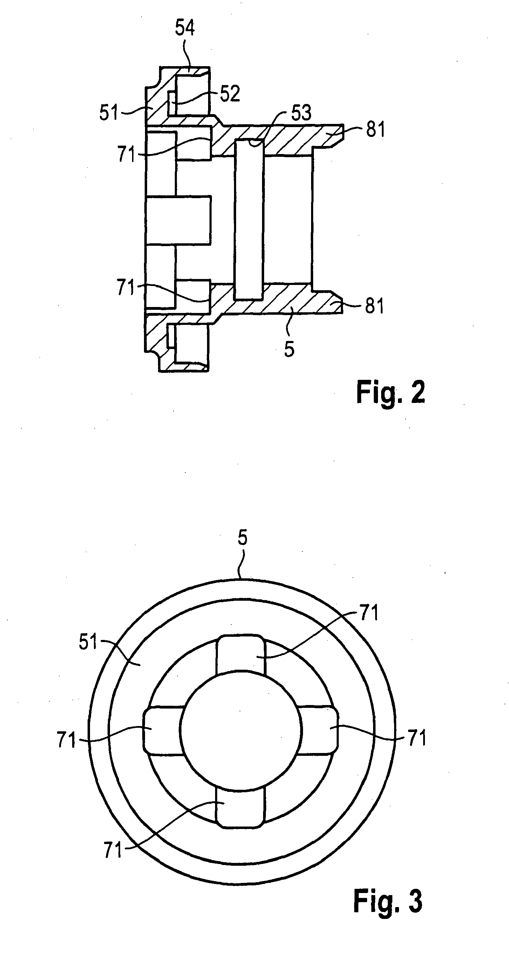

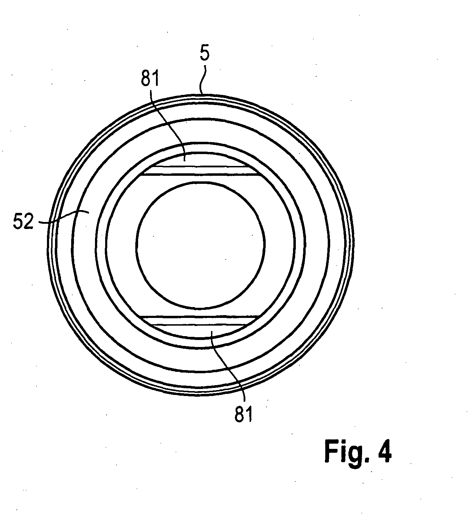

Ferner umfasst die vormontierte Gleitringdichtungseinheit 1 an der Innenhülse 5 eine erste Formschlussvorrichtung 7, welche an einem ersten axialen Ende der Innenhülse 5 angeordnet ist, sowie eine zweite Formschlussvorrichtung 8, welche an einem zweiten axialen Ende der Innenhülse 5 angeordnet ist. Die beiden Formschlussvorrichtungen 7, 8 stellen dabei eine formschlüssige Verbindung zum Pumpenlaufrad 15 bzw. zur Antriebswelle 14 bereit. Hierbei weist das Pumpenlaufrad 15 eine zur ersten Formschlussvorrichtung 7 passende Form auf, und an der Antriebswelle 14 ist an einem Wellenabsatz 14a eine entsprechende, zur zweiten Formschlussvorrichtung 8 gebildete Form vorgesehen. Die erste Formschlussvorrichtung 7 umfasst dabei, wie in Fig. 3 gezeigt, vier Ausnehmungen 71, welche gleich verteilt entlang des Umfanges an einer radial inneren Seite der Innenhülse 5 gebildet sind. Die zweite Formschlussvorrichtung 8 umfasst zwei vorstehende Elemente 81, welche, wie aus Fig. 4 ersichtlich ist, einander um 180° gegenüberliegend angeordnet sind. Die vorstehenden Elemente 81 greifen dabei in entsprechende am Wellenabsatz 14a der Antriebswelle 14 gebildete Ausnehmungen ein.

Die vormontierte Gleitringdichtungseinheit 1 umfasst ferner einen Sicherungsring 10, welcher die Aussenhülse 6 an der Innenhülse 5 hält, um eine montagefertige Einheit zu erhalten. Der Sicherungsring ist in radialer Richtung zwischen der Innenhülse 5 und der Aussenhülse 6 angeordnet. Alternativ kann statt des Sicherungsringes 10 das zum Laufrad 15 gerichtete freie Ende der Aussenhülse auch radial nach innen umgeformt werden. Dann kann die Gleitringdichtungseinheit 1 allerdings nicht mehr zerstörungsfrei demontiert werden, wie dies bei Verwendung des Sicherungsringes 10 möglich ist. Ferner umfasst die Gleitringdichtungseinheit 1 drei O-Ringe, wobei ein erster O-Ring 11 an einem äusseren Umfang des rotierenden Gleitringes 2 abdichtet, ein zweiter O-Ring 12 an einem äusseren Umfang des stationären Gleitringes 3 abdichtet und ein dritter 0-Ring 13 an einem inneren Umfang der Innenhülse 5 abdichtet. Wie aus Fig. 2 ersichtlich ist, ist am inneren Umfang der Innenhülse 5 eine umlaufende Nut 53 gebildet, welche den dritten O-Ring 13 aufnimmt. Ferner weist die Innenhülse 5 den radial nach aussen gerichteten Flansch 51 auf, in welchem eine ringförmige Ausnehmung 52 gebildet ist. Die ringförmige Ausnehmung 52 dient zur Aufnahme des rotierenden Gleitringes 2 sowie des ersten O-Ringes 11 (vgl. Fig. 1). Dabei übergreift ein Bereich 54 den rotierenden Gleitring 2 fast vollständig. Eine unerwünschte Rotation des stationären Gleitringes 3 wird dabei durch wenigstens einen Haltestift 18, welcher in eine Ausnehmung 30 im stationären Gleitring 3 eingreift, verhindert. Der Haltestift 18 ist in der Aussenhülse 6 fixiert. Eine axiale Länge L1 der Aussenhülse 6 ist in Axialrichtung X-X länger als eine axiale Länge L2 der Innenhülse 5.

Die Vormontage der Gleitringdichtungseinheit 1 kann dabei derart erfolgen, dass zuerst der erste O-Ring 11 sowie der rotierende Gleitring 2 in die Ausnehmung 52 der Innenhülse 5 angeordnet werden, anschliessend wird der stationäre Gleitring 3 sowie der zweite O-Ring 12 und das Federelement 9 auf die Innenhülse 5 aufgeschoben, dann wird die Aussenhülse 6 über die derart angeordneten Bauteile vom zweiten axialen Ende der Innenhülse her 5 aufgeschoben und mittels des Sicherungsringes 10 gesichert. Im nicht eingebauten Zustand drückt das Federelement 9 dabei die Aussenhülse 6 in axialer Richtung vom stationären Gleitring 3 weg, so dass der Sicherungsring 10 mit der Innenhülse 5, genauer am radial nach aussen gerichteten Flansch 51 anliegt. Hierdurch wird verhindert, dass sich die Einzelbauteile der vormontierten Gleitringdichtungseinheit 1 gegeneinander bewegen können und die Gleitringdichtungseinheit auseinander fallen kann. In dem in Fig. 1 gezeigten montierten Zustand wird dann das Federelement 5 durch die Aussenhülse 6 unter Vorspannung gehalten, und eine Vorspannkraft wird auf den stationären Gleitring 3 ausgeübt. Dadurch ist, wie aus Fig. 1 ersichtlich ist, der Sicherungsring 10 in Axialrichtung etwas von der Innenhülse beabstandet. Hierbei ist jedoch nur ein relativ kleiner Spalt 41 zwischen dem Sicherungsring 10 und der Innenhülse 5 vorhanden, so dass hierdurch grössere Feststoffteilchen daran gehindert werden, bis zum Dichtspalt 4 vorzudringen.

Durch das Vorsehen der formschlüssigen Verbindungen an den beiden axialen Enden der Innenhülse 5 kann eine sichere Montage der vormontierten Gleitringdichtungseinheit 1 ermöglicht werden. Da die beiden Formschlussvorrichtungen 7, 8 unterschiedlich ausgebildet sind, kann auch eine Falschmontage vermieden werden. Hierbei ist zur Montage kein besonderes Montagewerkzeug notwendig, sondern die Gleitringdichtungseinheit 1 kann einen Pumpraum 19 von einem Lagerraum 20, in welchem das Lager 17 angeordnet ist, abdichten. Dabei ist die Gleitringdichtungseinheit 1 in axialer Richtung X-X unmittelbar benachbart zum Lager 17 angeordnet.

Die Gleitringdichtungseinheit 1 kann in der Pumpe mittels einer Presspassung zwischen dem Aussenumfang der Aussenhülse 6 und dem Gehäuse 16 fixiert werden. Ggf. kann auch die Innenhülse 5 auf die Antriebswelle 14 aufgepresst werden.

## Patentansprüche

1. Pumpe, insbesondere Feuerlöschpumpe, mit einer vormontierten Gleitringdichtungseinheit, einem Pumpenlaufrad (15) und einer Antriebswelle (14), wobei die Gleitringdichtungseinheit umfasst:
- einen rotierenden Gleitring (2),
- einen stationären Gleitring (3), wobei der rotierende Gleitring (2) und der stationäre Gleitring (3) zwischen sich einen Dichtspalt (4) definieren,
- eine Innenhülse (5), welche mit dem rotierenden Gleitring (2) verbunden ist,
- eine Aussenhülse (6), welche mit dem stationären Gleitring (3) verbunden ist, und
- ein Sicherungselement (10), welches die Aussenhülse (6) an der Innenhülse (5) sichert,
- wobei die Innenhülse (5) und die Aussenhülse (6) in Axialrichtung (X-X) jeweils eine Länge aufweisen, welche grösser ist als eine Summe der axialen Längen des stationären und des rotierenden Gleitrings (2, 3),
- wobei die Innenhülse (5) an einem ersten axialen Ende eine erste Formschlussvorrichtung (7) und an einem zweiten axialen Ende eine zweite Formschlussvorrichtung (8) aufweist,
**dadurch gekennzeichnet, dass**
die erste Formschlussvorrichtung (7) zwischen der Innenhülse (5) und dem Pumpenlaufrad (15) ausgebildet ist und die zweite Formschlussvorrichtung (8) zwischen der Innenhülse (5) und der Antriebswelle (14) vorgesehen ist.

2. Pumpe nach Anspruch 1, **dadurch gekennzeichnet, dass** die erste und zweite Formschlussvorrichtung unterschiedliche Formen aufweisen.

3. Pumpe nach einem der vorhergehenden Ansprüche, **dadurch gekennzeichnet, dass** die erste Formschlussvorrichtung (7) Ausnehmungen (71) umfasst, welche in Umfangsrichtung gleich verteilt am ersten axialen Ende der Innenhülse (5) angeordnet sind.

4. Pumpe nach einem der vorhergehenden Ansprüche, **dadurch gekennzeichnet, dass** die zweite Formschlussvorrichtung (8) vorstehende Elemente (81) umfasst, welche in Umfangsrichtung gleich verteilt am zweiten axialen Ende der Innenhülse (5) angeordnet sind.

5. Pumpe nach einem der vorhergehenden Ansprüche, ferner umfassend ein Federelement (9), welches am stationären Gleitring (3) angeordnet ist, um den stationären Gleitring (3) gegen den rotierenden Gleitring (2) vorzuspannen.

6. Pumpe nach einem der vorhergehenden Ansprüche, **dadurch gekennzeichnet, dass** die Innenhülse (5) einen radial nach aussen gerichteten Flansch (51) aufweist und die Aussenhülse einen radial nach innen gerichteten Flansch (61) aufweist.

7. Pumpe nach Anspruch 6, **dadurch gekennzeichnet, dass** sich das Federelement (9) am radial nach innen gerichteten Flansch (61) der Aussenhülse (6) abstützt.

8. Pumpe nach Anspruch 6 oder 7, **dadurch gekennzeichnet, dass** im radial nach aussen gerichteten Flansch (51) eine umlaufende Ausnehmung (52) zur Aufnahme des rotierenden Gleitringes (2) vorgesehen ist.

9. Pumpe nach einem der vorhergehenden Ansprüche, **dadurch gekennzeichnet, dass** eine axiale Länge (L1) der Aussenhülse (6) grösser ist als eine axiale Länge (L2) der Innenhülse (5).

## Claims

1. A pump, particularly for a fire extinguishing pump, with a premounted mechanical seal unit, a pump impeller (15) and a drive shaft (14), the mechanical seal unit comprising
- a rotating seal ring (2),
- a stationary seal ring (3), the rotating seal ring (2) and the stationary seal ring (3) defining a seal gap (4) thereinbetween,
- an inner sleeve (5) which is connected to the rotating seal ring (2),
- an outer sleeve (6) which is connected to the stationary seal ring (3), and
- a securing element (10) which secures the outer sleeve (6) to the inner sleeve (5),
- the inner sleeve (5) and the outer sleeve (6) in axial direction (X-X) each having a length greater than a sum of the axial lengths of the stationary and the rotating seal ring (2, 3),
- the inner sleeve (5) comprising a first form closure device (7) on a first axial end and a second form closure device (8) on a second axial end, **characterized in that** the first form closure device (7) is formed between the inner sleeve (5) and the pump impeller (15) and the second form closure device (8) is provided between the inner sleeve (5) and the drive shaft (14).

2. The pump according to claim 1, **characterized in that** the first and second form closure device have different forms.

3. The pump according to any one of the preceding claims, **characterized in that** the first form closure device (7) comprises recesses (71) which are arranged in circumferential direction evenly distributed on the first axial end of the inner sleeve (5).

4. The pump according to any one of the preceding claims, **characterized in that** the second form closure device (8) comprises protruding elements (81) which are arranged in circumferential direction evenly distributed on the second axial end of the inner sleeve (5).

5. The pump according to any one of the preceding claims, further comprising a spring element (9) which is arranged on the stationary seal ring (3) to bias the stationary seal ring (4) against the rotating seal ring (2).

6. The pump according to any one of the preceding claims, **characterized in that** the inner sleeve (5) comprises a radially outwardly directed flange (51) and the outer sleeve comprises a radially inwardly directed flange (61).

7. The pump according to claim 6, **characterized in that** the spring element (9) is supported on the radially inwardly directed flange (61) of the outer sleeve (6).

8. The pump according to claim 6 or 7, **characterized in that** a surrounding recess (52) for accommodating the rotating seal ring (2) is provided in the radially outwardly directed flange (51).

9. The pump according to any one of the preceding claims, **characterized in that** an axial length (L1) of the outer sleeve (6) is greater than an axial length (L2) of the inner sleeve (5).

## Revendications

1. Pompe, notamment pompe à incendie avec une unité d'étanchéité à bagues de glissement prémontée, une roue de pompe (15) et un arbre d'entraînement (14), l'unité d'étanchéité à bagues de glissement comprenant :
- une bague de glissement (2) tournante,
- une bague de glissement (3) stationnaire, la bague de glissement (2) tournante et la bague de glissement (3) stationnaire définissant entre elles une fente étanche (4),
- une douille intérieure (5) qui est reliée à la bague de glissement (2) tournante,
- une douille extérieure (6) qui est reliée à la bague de glissement (3) stationnaire et
- un élément de blocage (10) qui bloque la douille extérieure (6) sur la douille intérieure (5),
- la douille intérieure (5) et la douille extérieure (6) présentant dans le sens axial (X-X) respectivement une longueur qui est plus grande qu'une somme des longueurs axiales des bagues de glissement (2, 3) stationnaire et tournante,
- la douille intérieure (5) présentant sur une première extrémité axiale un premier dispositif à complémentarité de forme (7) et sur une seconde extrémité axiale un second dispositif à complémentarité de forme (8), **caractérisée en ce que** le premier dispositif à complémentarité de forme (7) est réalisé entre la douille intérieure (5) et la roue de pompe (15) et le second dispositif à complémentarité de forme (8) est prévu entre la douille intérieure (5) et l'arbre d'entraînement (14).

2. Pompe selon la revendication 1, **caractérisée en ce que** le premier et le second dispositifs à complémentarité de forme présentent différentes formes.

3. Pompe selon l'une quelconque des revendications précédentes, **caractérisée en ce que** le premier dispositif à complémentarité de forme (7) comporte des évidements (71) qui sont disposés répartis uniformément dans le sens périphérique sur la première extrémité axiale de la douille intérieure (5).

4. Pompe selon l'une quelconque des revendications précédentes, **caractérisée en ce que** le second dispositif à complémentarité de forme (8) comporte des éléments en saillie (81) qui sont disposés répartis uniformément dans le sens périphérique sur la seconde extrémité axiale de la douille intérieure (5).

5. Pompe selon l'une quelconque des revendications précédentes, comprenant de plus un élément de ressort (9) qui est disposé sur la bague de glissement stationnaire (3) afin de précontraindre la bague de glissement (3) stationnaire contre la bague de glissement (2) tournante.

6. Pompe selon l'une quelconque des revendications précédentes, **caractérisée en ce que** la douille intérieure (5) présente une bride (51) dirigée radialement vers l'extérieur et la douille extérieure présente une bride (61) dirigée radialement vers l'intérieur.

7. Pompe selon la revendication 6, **caractérisée en ce que** l'élément de ressort (9) s'appuie contre la bride (61) dirigée radialement vers l'intérieur de la douille extérieure (6).

8. Pompe selon la revendication 6 ou 7, **caractérisée en ce qu'**un évidement (52) périphérique est prévu pour la réception de la bague de glissement (2) tournante dans la bride (51) dirigée radialement vers l'extérieur.

9. Pompe selon l'une quelconque des revendications précédentes, **caractérisée en ce qu'**une longueur axiale (L1) de la douille extérieure (6) est supérieure à une longueur axiale (L2) de la douille intérieure (5).
